# EUROPÄISCHE PATENTSCHRIFT

(11) **EP 3 041 779 B1**
(45) Veröffentlichungstag und Bekanntmachung des Hinweises auf die Patenterteilung: **04.09.2019**
(21) Anmeldenummer: 14758944.4
(22) Anmeldetag: 04.09.2014
(51) Int. Cl.: B66C 23/80, E04G 21/04, B60K 35/00, B60W 50/14

(54) **ARBEITSMASCHINE UND VERFAHREN ZU DEREN BETRIEB**
WORKING MACHINE AND METHOD FOR OPERATING SAID WORKING MACHINE
MACHINE DE TRAVAIL ET PROCÉDÉ DE FONCTIONNEMENT

(30) Priorität: 06.09.2013 DE 102013217853
(43) Veröffentlichungstag der Anmeldung: 13.07.2016
(73) Patentinhaber: Putzmeister Engineering GmbH, 72631 Aichtal (DE)
(72) Erfinder: MAYER, Martin, 72768 Reutlingen (DE); JAHN, Dirk, 72622 Nürtingen (DE)
(74) Vertreter: Pfiz, Thomas
(86) Internationale Anmeldenummer: PCT/EP2014/068809
(87) Internationale Veröffentlichungsnummer: WO 2015/032845

(56) Entgegenhaltungen:
- EP-A2- 1 284 472
- DE-A1- 10 357 492
- DE-A1-102008 012 229
- DE-A1-102008 047 425
- DE-A1-102008 051 982

## Beschreibung

Die Erfindung betrifft eine Arbeitsmaschine, insbesondere Autobetonpumpe, Betonfahrmischer oder Mobilkran mit einem Fahrzeug, das ein Fahrgestell, einen Fahrmotor und eine fahrzeugfeste Kontrolleinheit zur Ausgabe von Betriebsinformationen sowie Warn- und Störmeldungen für den Betrieb des Fahrmotors umfasst, mit einem auf dem Fahrgestell transportierbaren, in einem Arbeitsbetrieb mit Antriebsenergie aus dem Fahrmotor versorgten Arbeitsaggregat, insbesondere Betonpumpe, und mit einer von dem Fahrgestell entfernt bedienbaren mobilen Fernsteuereinrichtung für das Arbeitsaggregat. Die Erfindung betrifft weiter ein Verfahren zum Betrieb einer derartigen Arbeitsmaschine.

Bei herkömmlichen Autobetonpumpen ist das Fahrzeug als Lastkraftwagen-Unterbau dazu ausgelegt, das aufgebaute Aggregat, also die Betonpumpe mit Verteilermast, in einem Fahrbetrieb im Straßenverkehr zum Einsatzort zu bringen. Vor Ort wird der Fahrmotor des Kraftwagens weiterhin benutzt, um hydraulische Pumpen für den Arbeitsbetrieb des Arbeitsaggregats anzutreiben. Dabei kann der Maschinist in einem Arbeitsbereich vom Fahrzeug entfernt sein, um den Betonverteilermast mittels der Fernsteuereinrichtung von einem günstigen Bedienort aus zu steuern. In diesem Zusammenhang ist es problematisch, wenn nur in der unbesetzten Fahrerkabine eventuelle Motorstörungen angezeigt werden.

Das Dokument DE 10 2008 047 425 A befasst sich mit dem Problem von möglichen Kollisionen von Arbeits/Abstützorganen mit dem Bediener beim Einsatz von Fernbedienungen und daraus resultierenden Verletzungen des Bedieners. Um dies zu vermeiden, werden verschiedene Sicherheitszonen festgelegt, um bestimmte Bedienungen der Abstützorgane freizugeben. Dabei soll für die Bedienung der Stützausleger und der Stützbeine ein Fernsteuergerät eingesetzt werden.

DE 102008 051 982 A offenbart eine Fernsteuervorrichtung insbesondere für Parkmanöver eines PKW, womit Beschädigungen am Fahrzeug und an Objekten bei Ein- und Ausparkvorgängen vermieden werden sollen. Warnmeldungen werden dort im Zusammenhang mit dem Abstand des Fahrzeuges von anderen Objekten offenbart.

Ausgehend hiervon liegt der Erfindung die Aufgabe zugrunde, die im Stand der Technik bekannten Arbeitsmaschinen und Verfahren weiter zu verbessern und für eine erhöhte Betriebssicherheit und Bedienungsfreundlichkeit sowie den Schutz von Investitionen zu sorgen.

Zur Lösung dieser Aufgabe wird die in den unabhängigen Patentansprüchen angegebene Merkmalskombination vorgeschlagen. Vorteilhafte Ausgestaltungen und Weiterbildungen der Erfindung ergeben sich aus den abhängigen Ansprüchen.

Die Erfindung geht von dem Gedanken aus, bisher nur an den Fahrzeugführer übermittelte Motorzustandsinformationen auch für den Maschinist auf der Baustelle bereitzustellen. Dementsprechend wird erfindungsgemäß vorgeschlagen, dass die Fernsteuereinrichtung eine zur Ausgabe mindestens von Warn- und Störmeldungen für den Betrieb des Fahrmotors ausgebildete mobile Kontrolleinheit umfasst. Solche Meldungen sind für den ungestörten Motorbetrieb und damit auch den Folgebetrieb des Arbeitsaggregats von essentieller Bedeutung. Unbemerkte Störungen können nicht nur zu Motorschäden führen, sondern auch fatale Schäden für das Arbeitsaggregat beispielsweise bei Aushärten von Beton in der Förderleitung nach sich ziehen. Für die Generierung der Warn- und Störmeldungen werden beispielsweise kritische Kraftstoff-, Öl-, Kühlmittelstände und -drücke erfasst. Bei rechtzeitigem Eingreifen in den Prozess der Arbeitsmaschine kann so Schaden von den Investitionsgütern abgewendet werden.

Eine besonderer Erfindungsaspekt ist auf eine Autobetonpumpe als Arbeitsmaschine gerichtet, welche folgende Merkmale umfasst:
- einem Straßenfahrzeug, das ein Fahrgestell, einen Fahrmotor und eine fahrzeugfeste Kontrolleinheit in einer Fahrerkabine zur Ausgabe von Betriebsinformationen sowie Warn- und Störmeldungen für den Betrieb, insbesondere den Straßenfahrbetrieb des Fahrmotors umfasst,
- einem auf dem Fahrgestell aufgebauten und darauf transportierbaren, zur Förderung von Beton in einem Arbeitsbetrieb mit Antriebsenergie aus dem Fahrmotor versorgten Arbeitsaggregat in Form einer Betonpumpe mit daran angeschlossenem Betonverteilermast,
- einer von dem Fahrgestell entfernt bedienbaren mobilen Fernsteuereinrichtung, die als Fernbedienung für die Bedienung des Betonverteilermasts eingerichtet ist,
- wobei die Fernsteuereinrichtung eine mobile Kontrolleinheit für den Fahrmotor umfasst und die mobile Kontrolleinheit zur gleichzeitigen bzw. parallelen Ausgabe mindestens einer der in der Fahrerkabine ausgegebenen Warn- und Störmeldungen ausgebildet ist,
- wobei die mobile Kontrolleinheit eine Eingriffseinrichtung zum automatischen oder manuellen Eingriff in eine Funktion des Fahrmotors und/oder des Arbeitsaggregats nach Maßgabe der Warn- und Störmeldungen im Arbeitsbetrieb aufweist, so dass sich gegebenenfalls Folgeschäden abwenden lassen.

Solche Autobetonpumpen werden üblicherweise auf einem Straßenfahrzeug aufgebaut, das von einem Fahrzeughersteller mit einem Motormanagement für den Straßenverkehr konzipiert wird, während der Aufbau gesondert von einem Betonpumpenhersteller bewerkstelligt wird. Aufgrund der Reichweite des Betonverteilermasts ist eine Fernbedienung für den Arbeitsbetrieb zweckmäßig, wobei der Bediener dann aber die Kontrolle über den Fahrmotor gleichsam aus den Augen verliert. Die Erfindung schafft hier Abhilfe, indem eine parallele Ausgabe von Warn- und Störmeldungen in der Fahrerkabine und auf der Fernbedienung ermöglicht wird.

Um die Betriebsdaten bereitzustellen, ist es vorteilhaft, wenn die mobile Kontrolleinheit über eine vorzugsweise drahtlose Übertragungsstrecke mit einer fahrzeugseitigen Schnittstelle, beispielsweise einem CAN-Bus verbunden ist.

Zur Erhöhung der Betriebssicherheit sind die fahrzeugfeste und die mobile Kontrolleinheit zur gleichzeitigen, gespiegelten Anzeige von Warn- und Störmeldungen parallel angesteuert.

Eine weitere Verbesserung sieht vor, dass die mobile Kontrolleinheit eine Anzeigeeinrichtung, insbesondere einen Bildschirm und/oder Warnleuchten zur visuellen Anzeige der Warn- und Störmeldungen aufweist.

Für einen flexiblen Einsatz ist es von Vorteil, wenn die mobile Kontrolleinheit zugleich zur Ausgabe von Bedieninformationen für die Fernsteuerung des Arbeitsaggregats eingerichtet ist.

Generell sind die Warn- und Störmeldungen vorzugsweise in Form von symbolischen oder textlichen Darstellungen oder akustischen Signalen oder haptischem Feedback (Vibration) zur Information eines Bedieners über Fehlfunktionen, Störungen oder Gefahren für den Betrieb des Fahrmotors geeignet und bestimmt.

Vorteilhaft ist auch ein Informationsprozessor zur Bereitstellung von mit den Warn- und Störmeldungen verknüpften Informationen wie Störungsursache, Dringlichkeit und Handlungsbedarf.

In diesem Zusammenhang ist es auch günstig, wenn eine vorzugsweise über ein Mobilfunknetz mit einer fahrzeugfernen Leitstelle verbindbare Übertragungseinrichtung zur Übertragung von Warn- und Störmeldungen und gegebenenfalls entsprechenden Betriebsinformationen des Fahrmotors und/oder Arbeitsaggregats im Arbeitsbetrieb eingerichtet ist.

Vorteilhafterweise betrifft mindestens eine auf der fahrzeugfesten und der mobilen Kontrolleinheit ausgegebene Warn- und Störmeldung einen Parameter aus der Gruppe Kraftstoffvorrat, Öltemperatur, Ölstand, Kühlmittelstand, Motordrehzahl, so dass kritische Motorzustände auch im Baustellenbetrieb nicht unbemerkt bleiben.

In verfahrensmäßiger Hinsicht werden zur Lösung der eingangs genannten Aufgabe folgende Maßnahmen vorgeschlagen:
- Ausgeben von Betriebsinformationen sowie gegebenenfalls Warn- und Störmeldungen für den Betrieb des Fahrmotors des Fahrzeugs auf einer fahrzeugfesten Kontrolleinheit,
- Versorgen des auf dem Fahrgestell aufgebauten Arbeitsaggregats in einem Arbeitsbetrieb mit Antriebsenergie aus dem Fahrmotor,
- Bedienen des Arbeitsaggregats mittels einer mobilen Fernsteuereinrichtung entfernt von dem Fahrzeug,
- Ausgegeben von Warn- und Störmeldungen für den Betrieb des Fahrmotors auf einer mobilen Kontrolleinheit der Fernsteuereinrichtung,
wobei die mobile Kontrolleinheit eine Eingriffseinrichtung zum automatischen oder manuellen Eingriff in eine Funktion des Fahrmotors und/oder des Arbeitsaggregats nach Maßgabe der Warn- und Störmeldungen im Arbeitsbetrieb aufweist, so dass sich gegebenenfalls Folgeschäden abwenden lassen.

Im Folgenden wird die Erfindung anhand des in der Zeichnung schematisch dargestellten Ausführungsbeispiels näher erläutert. Es zeigen:
- Fig. 1: eine Seitenansicht einer Autobetonpumpe mit einer Fernsteuereinrichtung;
- Fig. 2: eine Draufsicht auf die Fernsteuereinrichtung;
- Fig. 3: einen Bildschirminhalt einer fahrzeugfesten Kontrolleinheit;
- Fig. 4 und 5: einen Bildschirminhalt einer mobilen Kontrolleinheit für Betriebsinformationen und Warnungen.

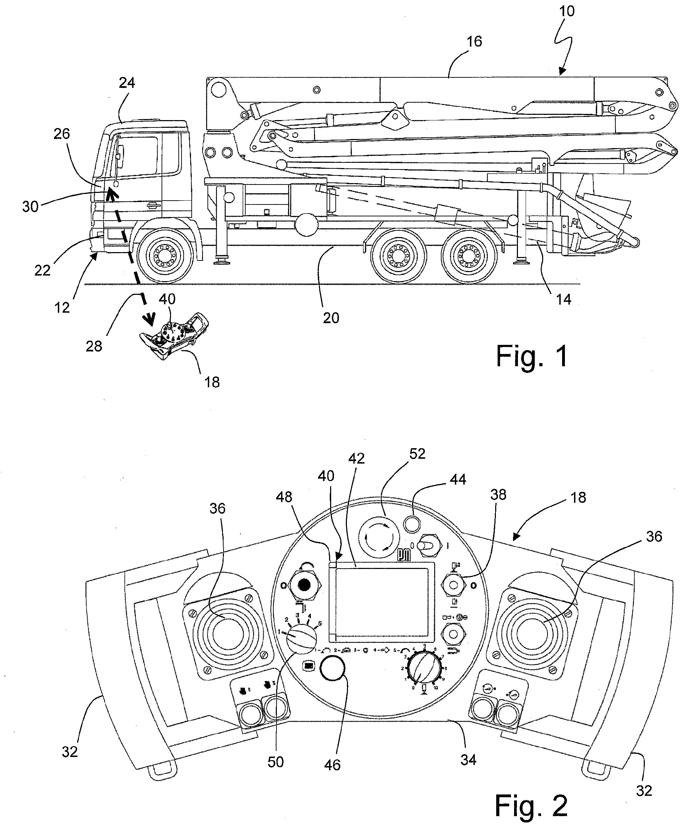

Die in Fig. 1 gezeigte fahrbare Arbeitsmaschine 10 umfasst als Autobetonpumpe ein Fahrzeug 12 und ein darauf aufgebautes Arbeitsaggregat in Form einer Betonpumpe 14 mit angeschlossenem Betonverteilermast 16. Das Arbeitsaggregat lässt sich mittels einer tragbaren Fernsteuereinrichtung 18 im Arbeitsbetrieb, d.h. bei stationär abgestütztem Fahrzeug von einer Bedienperson aus veränderlichen Bedienpositionen fernsteuern.

Das in einem Fahrbetrieb im Straßenverkehr bewegbare Fahrzeug 12 besitzt ein Fahrgestell 20, einen Fahrmotor 22 und eine Fahrerkabine 24, in welcher eine fahrzeugfeste Kontrolleinheit 26, insbesondere eine Armaturentafel mit Bordcomputer zur Ausgabe von Betriebsinformationen sowie Warn- und Störmeldungen für den Fahrbetrieb angeordnet ist. Das Fahrzeug 12 bzw. der Unterbau wird in der Regel von einem Hersteller für Lastkraftwagen weitgehend standardisiert für den Straßenverkehr gefertigt, während für den Arbeitsbetrieb besondere Anpassungen des Aufbaus erforderlich sind. Insbesondere wird der Fahrmotor auch dazu eingesetzt, die Antriebsenergie für Hydraulikpumpen des Arbeitsaggregats 14 zu liefern. Daher sind bestimmte Zustandsinformationen über den Fahrmotor auch im Arbeitsbetrieb von besonderem Interesse.

Um einen Informationsaustausch zu ermöglichen, ist die Fernsteuereinrichtung 18 über eine (drahtlose) Übertragungsstrecke mit einer fahrzeugseitigen Schnittstelle 30 verbunden. Diese ermöglicht beispielsweise über einen CAN-Bus auch die Bereitstellung von Informationen, wie sie in der Armaturentafel für den Fahrzeuglenker ausgegeben werden.

Wie aus Fig. 2 ersichtlich, umfasst die Fernsteuereinrichtung 18 ein mit Tragegriffen 32 ausgestattetes Gehäuse 34. Darin ist neben verschiedenen Bedienelementen für den Arbeitsbetrieb, beispielsweise Joysticks 36 für die Bewegungssteuerung des Verteilermasts 16 und Kippschalter 38 für die Pumprichtung eine mobile Kontrolleinheit 40 integriert, die auch für die Ausgabe von für den Betrieb des Fahrmotors bedeutsamen Warn- und Störmeldungen eingerichtet ist. Zu diesem Zweck umfasst die mobile Kontrolleinheit 40 einen Bildschirm 42 und Warnleuchten 44 sowie gegebenenfalls akustische Melder 46.

Die computerisierte mobile Kontrolleinheit 40 lässt sich über die Schnittstelle 30 parallel zu dem Bordcomputer mit Motorbetriebsdaten versorgen, so dass eine gespiegelte bzw. inhaltliche Anzeige von Warn- und Störmeldungen möglich ist. Darüber hinaus enthält die mobile Kontrolleinheit 40 auch einen Informationsprozessor 48 bzw. eine Software, die zur Bereitstellung von mit den Warn- und Störmeldungen verknüpften Informationen wie Störungsursache, Dringlichkeit und Handlungsbedarf eingerichtet ist. Zweckmäßig weist die mobile Kontrolleinheit 40 auch eine Eingriffseinrichtung 50 für den Eingriff in eine Funktion des Fahrmotors 22 und/oder des Arbeitsaggregats 14 in Abhängigkeit von den Warn- und Störmeldungen auf. Beispielsweise könnte im Fall eines drohenden Motorschadens die Motordrehzahl manuell (oder ggf. automatisch) so weit abgesenkt werden, dass noch ein Notbetrieb für die Entleerung der Betonförderleitung möglich ist.

Grundsätzlich ist es auch möglich, eine Übertragungseinrichtung 52 über ein Mobilfunknetz mit einer fahrzeugfernen Leitstelle zu verbinden, um Warn-und Störmeldungen und gegebenenfalls entsprechenden Betriebsinformationen des Fahrmotors 22 und/oder Arbeitsaggregats 14 im Arbeitsbetrieb zu übertragen. Beispielsweise könnte bei einem Ausfall des Fahrmotors 22 die Leitstelle darüber unterrichtet werden, so dass weitere Lieferungen von Frischbeton möglichst noch verhindert werden.

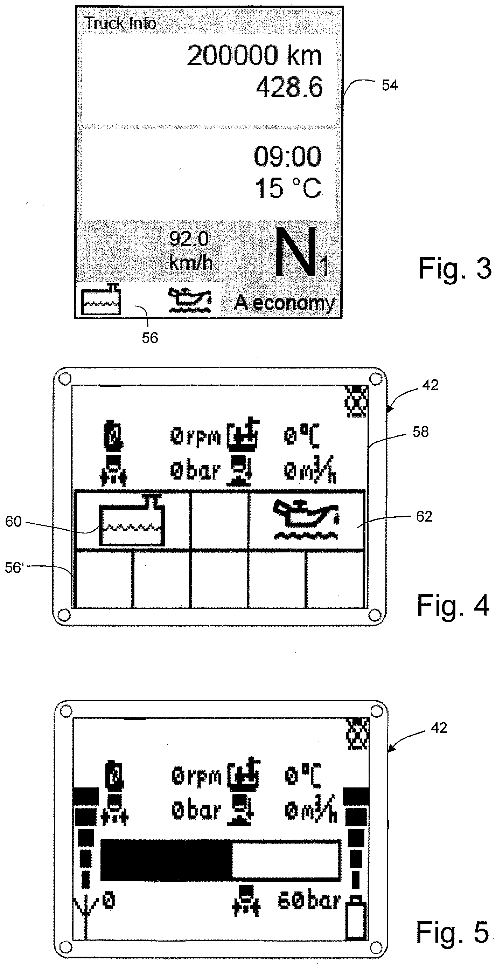

Fig. 3 zeigt einen Bildschirm des Bordcomputers bzw. der fahrzeugfesten Kontrolleinheit 26 im Fahrbetrieb. Angezeigt werden Betriebsinformationen wie Kilometerstand und Fahrgeschwindigkeit. Daneben können in einem Warnfeld 56 bei drohenden oder eingetretenen Motorstörungen entsprechende Warn- und Störmeldungen wie Kraftstoffreserve oder Motorölmangel in Form von symbolischen Darstellungen eingeblendet werden. Solche Meldungen können auch im Arbeitsbetrieb generiert werden, möglicherweise aber in der Fahrerkabine 24 unbemerkt bleiben. Um hier einen möglicherweise erheblichen Schaden abzuwenden, werden die Warn- und Störmeldungen parallel auf dem Bildschirm 42 der mobilen Kontrolleinheit 40 ausgegeben.

Fig. 4 zeigt einen Bildschirminhalt bzw. ein Menüfenster 58 auf dem Bildschirm 42, in dessen unterem Warnfeld 56' die Warnsymbole 60, 62 entsprechend der fahrzeugfesten Anzeige 56 gespiegelt sind. Dadurch wird der ggf. vom Fahrzeug 12 entfernte Maschinist auf Fehlfunktionen, Störungen oder Gefahren für den Betrieb des Fahrmotors und mögliche Folgeschäden für den Betrieb des Arbeitsaggregats aufmerksam gemacht.

Im Normalbetrieb werden auf dem Bildschirm 42 der mobilen Kontrolleinheit menügesteuert unterschiedliche Bedien- und Betriebsinformationen für die Fernsteuerung des Arbeitsaggregats 14 ausgegeben, wie es in Fig. 5 veranschaulicht ist. Beispielsweise kann dann anstelle des Warnfeldes 56' der Hydraulikdruck angezeigt werden.

## Patentansprüche

1. Arbeitsmaschine, insbesondere Autobetonpumpe (10), Betonfahrmischer oder Mobilkran mit
a) einem Fahrzeug (12), das ein Fahrgestell (20), einen Fahrmotor (22) und eine fahrzeugfeste Kontrolleinheit (26) zur Ausgabe von Betriebsinformationen sowie Warn- und Störmeldungen für den Betrieb des Fahrmotors (22) umfasst,
b) einem auf dem Fahrgestell (20) transportierbaren, in einem Arbeitsbetrieb mit Antriebsenergie aus dem Fahrmotor (22) versorgten Arbeitsaggregat (14), insbesondere Betonpumpe,
c) einer von dem Fahrgestell (20) entfernt bedienbaren mobilen Fernsteuereinrichtung (18) für das Arbeitsaggregat (14),
**dadurch gekennzeichnet, dass**
d) die Fernsteuereinrichtung (18) eine zur Ausgabe von Warn- und Störmeldungen für den Betrieb des Fahrmotors (22) ausgebildete mobile Kontrolleinheit (40) umfasst,
e) und dass die mobile Kontrolleinheit (40) eine Eingriffseinrichtung (50) zum automatischen oder manuellen Eingriff in eine Funktion des Arbeitsaggregats (14) nach Maßgabe der Warn- und Störmeldungen im Arbeitsbetrieb aufweist.

2. Arbeitsmaschine gebildet durch eine Autobetonpumpe (10) mit folgenden Merkmalen:
a) einem Straßenfahrzeug (12), das ein Fahrgestell (20), einen Fahrmotor (22) und eine fahrzeugfeste Kontrolleinheit (26) in einer Fahrerkabine (24) zur Ausgabe von Betriebsinformationen sowie Warn- und Störmeldungen für den Betrieb, insbesondere den Straßenfahrbetrieb des Fahrmotors (22) umfasst,
b) einem auf dem Fahrgestell (20) aufgebauten und darauf transportierbaren, zur Förderung von Beton in einem Arbeitsbetrieb mit Antriebsenergie aus dem Fahrmotor (22) versorgten Arbeitsaggregat (14) in Form einer Betonpumpe (14) mit daran angeschlossenem Betonverteilermast (16),
c) einer von dem Fahrgestell (20) entfernt bedienbaren mobilen Fernsteuereinrichtung (18), die für die Bedienung des Betonverteilermasts (16) eingerichtet ist,
**dadurch gekennzeichnet, dass**
d) die Fernsteuereinrichtung (18) eine mobile Kontrolleinheit (40) für den Fahrmotor (22) umfasst, wobei die mobile Kontrolleinheit (40) zur gleichzeitigen Ausgabe mindestens einer der in der Fahrerkabine (24) ausgegebenen Warn- und Störmeldungen ausgebildet ist,
e) und wobei die mobile Kontrolleinheit (40) eine Eingriffseinrichtung (50) zum automatischen oder manuellen Eingriff in eine Funktion des Arbeitsaggregats (14) nach Maßgabe der Warn- und Störmeldungen im Arbeitsbetrieb aufweist.

3. Arbeitsmaschine nach Anspruch 1 oder 2, **dadurch gekennzeichnet, dass** die mobile Kontrolleinheit (40) über eine vorzugsweise drahtlose Übertragungsstrecke (28) mit einer fahrzeugseitigen Schnittstelle (30) verbunden ist.

4. Arbeitsmaschine nach einem der Ansprüche 1 bis 3, **dadurch gekennzeichnet, dass** die fahrzeugfeste und die mobile Kontrolleinheit (26,40) zur gleichzeitigen Anzeige von Warn- und Störmeldungen parallel angesteuert sind.

5. Arbeitsmaschine nach einem der Ansprüche 1 bis 4, **dadurch gekennzeichnet, dass** die mobile Kontrolleinheit (40) eine Anzeigeeinrichtung (42), insbesondere einen Bildschirm und/oder Warnleuchten zur visuellen Anzeige der Warn- und Störmeldungen aufweist.

6. Arbeitsmaschine nach einem der Ansprüche 1 bis 5, **dadurch gekennzeichnet, dass** die mobile Kontrolleinheit (40) zur Ausgabe von Bedieninformationen für die Fernsteuerung des Arbeitsaggregats (14) eingerichtet ist.

7. Arbeitsmaschine nach einem der Ansprüche 1 bis 6, **dadurch gekennzeichnet, dass** die Warn- und Störmeldungen vorzugsweise in Form von symbolischen oder textlichen Darstellungen (62) oder akustischen Signalen oder haptischem Feedback zur Information eines Bedieners über Fehlfunktionen, Störungen oder Gefahren für den Betrieb des Fahrmotors (22) vorgesehen sind.

8. Arbeitsmaschine nach einem der Ansprüche 1 bis 7, **gekennzeichnet durch** einen Informationsprozessor (48) zur Bereitstellung von mit den Warn- und Störmeldungen verknüpften Informationen wie Störungsursache, Dringlichkeit und Handlungsbedarf.

9. Arbeitsmaschine nach einem der Ansprüche 1 bis 8, **gekennzeichnet durch** eine vorzugsweise über ein Mobilfunknetz mit einer fahrzeugfernen Leitstelle verbindbare Übertragungseinrichtung (52) zur Übertragung von Warn- und Störmeldungen und gegebenenfalls entsprechenden Betriebsinformationen des Fahrmotors (22) und/oder Arbeitsaggregats (14) im Arbeitsbetrieb.

10. Arbeitsmaschine nach einem der Ansprüche 1 bis 9, **dadurch gekennzeichnet, dass** mindestens eine auf der fahrzeugfesten und der mobilen Kontrolleinheit ausgegebene Warn- und Störmeldung einen Parameter aus der Gruppe Kraftstoffvorrat, Öltemperatur, Ölstand, Kühlmittelstand, Motordrehzahl betrifft.

11. Verfahren zum Betrieb einer Arbeitsmaschine umfassend ein Fahrzeug (12), ein Arbeitsaggregat (14) und eine Fernsteuereinrichtung (18) nach einem der vorhergehenden Ansprüche bei welchem
a) auf einer fahrzeugfesten Kontrolleinheit Betriebsinformationen sowie gegebenenfalls Warn- und Störmeldungen für den Betrieb des Fahrmotors (22) des Fahrzeugs (12) ausgegeben werden,
b) das auf dem Fahrgestell (20) aufgebaute Arbeitsaggregat (14) in einem Arbeitsbetrieb mit Antriebsenergie aus dem Fahrmotor (22) versorgt wird,
c) das Arbeitsaggregat (14) mittels einer mobilen Fernsteuereinrichtung (18) von dem Fahrgestell (20) entfernt bedient wird,
**dadurch gekennzeichnet, dass**
d) auf einer mobilen Kontrolleinheit (40) der Fernsteuereinrichtung (18) mindestens eine der Warn- und Störmeldungen für den Betrieb des Fahrmotors (22) ausgegeben werden,
e) wobei die mobile Kontrolleinheit (40) eine Eingriffseinrichtung (50) zum automatischen oder manuellen Eingriff in eine Funktion des Arbeitsaggregats (14) nach Maßgabe der Warn- und Störmeldungen im Arbeitsbetrieb aufweist.

12. Verfahren nach Anspruch 11, **dadurch gekennzeichnet, dass** mindestens eine Warn- und Störmeldung betreffend einen Parameter aus der Gruppe Kraftstoffvorrat, Öltemperatur, Ölstand, Kühlmittelstand, Motordrehzahl parallel auf der fahrzeugfesten und der mobilen Kontrolleinheit ausgegeben wird.

## Claims

1. A working machine, in particular a truck-mounted concrete pump (10), concrete mixer or mobile crane having
a) a vehicle (12) which comprises a chassis (20), a drive engine (22) and a control unit (26) which is fixed to the vehicle and has the purpose of outputting operating information as well as warning- and fault-messages for the operation of the drive engine (22),
b) a working assembly (14), in particular concrete pump, which can be transported on the chassis (20), and in a working mode is supplied with drive energy from the drive engine (22),
c) a mobile remote-control device (18), which can be operated at a distance from the chassis (20), for the working assembly (14),
**characterized in that**
d) the remote-control device (18) comprises a mobile control unit (40) which is adapted to output warning- and fault-messages for the operation of the drive engine (22),
e) and that the mobile control unit (40) has an intervention device (50) for the automatic or manual intervention in a function of the working assembly (14) in accordance with the warning- and fault-messages in the working mode.

2. A working machine formed by a truck-mounted concrete pump (10) having the following features:
a) a road vehicle (12) which comprises a chassis (20), a drive engine (22) and a control unit (26) which is fixed to the vehicle, in a driver's cab (24), for outputting operating information and warning- and fault-messages for the operation, in particular the road travel mode of the drive engine (22),
b) a working assembly (14), in the form of a concrete pump (14) with concrete distributor boom (16) connected thereto, which working assembly (14) is built on the chassis (20), can be transported thereon and is supplied in a working mode with drive energy from the drive engine (22) in order to feed concrete,
c) a mobile remote-control device (18) which can be operated at a distance from the chassis (20) and is configured to operate the concrete distributor boom (16),
**characterized in that**
d) the remote-control device (18) comprises a mobile control unit (40) for the drive engine (22), wherein the mobile control unit (40) is designed to simultaneously output at least one of the warning- and fault-messages which are output in the driver's cab (24),
e) and wherein the mobile control unit (40) has an intervention device (50) for the automatic or manual intervention in a function of the working assembly (14) in accordance with the warning- and fault-messages in the working mode.

3. The working machine as claimed in claim 1 or 2, **characterized in that** the mobile control unit (40) is connected to a vehicle-side interface (30) via a preferably wireless transmission link (28).

4. The working machine as claimed in one of claims 1 to 3, **characterized in that** the control unit (26) which is fixed to the vehicle and the mobile control unit (40) are actuated in parallel in order to simultaneously display warning- and fault-messages.

5. The working machine as claimed in one of claims 1 to 4, **characterized in that** the mobile control unit (40) has a display device (42), in particular a screen and/or warning lights, for visually displaying the warning- and fault-messages.

6. The working machine as claimed in one of claims 1 to 5, **characterized in that** the mobile control unit (40) is configured to output operator control information for the remote control of the working assembly (14).

7. The working machine as claimed in one of claims 1 to 6, **characterized in that** the warning- and fault-messages are preferably provided in the form of symbolic or textural representations (62) or acoustic signals or haptic feedback for informing an operator about malfunctions, faults or risks for the operation of the drive engine (22).

8. The working machine as claimed in one of claims 1 to 7, **characterized by** an information processor (48) for providing information such as the cause of a fault, urgency and need for action, which is linked to the warning- and fault-messages.

9. The working machine as claimed in one of claims 1 to 8, **characterized by** a transmission device (52) which can preferably be connected via a mobile radio network to a control center which is remote from the vehicle, and has the purpose of transmitting warning- and fault-messages and, if appropriate, corresponding operating information of the drive engine (22) and/or working assembly (14) in the working mode.

10. The working machine as claimed in one of claims 1 to 9, **characterized in that** at least one warning- and fault-message which is output on the control unit which is fixed to the vehicle and on the mobile control unit relates to a parameter from the group of the fuel supply, oil temperature, oil level, coolant level, rotational speed of the engine.

11. A method for operating a working machine comprising a vehicle (12), a working assembly (14) and a remote-control device (18) as claimed in one of the preceding claims, in which method
a) operating information and, if appropriate, warning- and fault-messages for the operation of the drive engine (22) of the vehicle (12) are output on a control unit which is fixed to the vehicle,
b) the working assembly (14) which is built on the chassis (20) is supplied with drive energy from the drive engine (22) in a working mode,
c) the working assembly (14) is operated at a distance from the chassis (20) by means of a mobile remote-control device (18),
**characterized in that**
d) at least one of the warning- and fault-messages for the operation of the drive engine (22) are output on a mobile control unit (40) of the remote-control device (18),
e) wherein the mobile control unit (40) has an intervention device (50) for the automatic or manual intervention in a function of the working assembly (14) in accordance with the warning- and fault-messages in the working mode.

12. The method as claimed in claim 11, **characterized in that** at least one warning- and fault-message relating to a parameter from the group of fuel supply, oil temperature, oil level, coolant level, rotational speed of the engine is output in parallel on the control unit which is fixed to the vehicle and the mobile control unit.

## Revendications

1. Machine de travail, en particulier pompe à béton automotrice (10), mélangeur mobile à béton ou grue mobile comportant
a) un véhicule (12) qui comprend un châssis (20), un moteur de traction (22) et une unité de contrôle fixée au véhicule (26) destinée à émettre des informations de fonctionnement ainsi que des messages d'avertissement et de panne pour le fonctionnement du moteur de traction (22),
b) une unité de travail (14), en particulier une pompe à béton, pouvant être transportée sur le châssis (20) et alimentée en énergie d'entraînement provenant du moteur de traction (22) dans un mode de travail,
c) un dispositif de commande à distance (18) mobile de l'unité de travail (14), pouvant être commandé à distance depuis le châssis (20),
**caractérisée en ce que**
d) le dispositif de commande à distance (18) comprend une unité de contrôle mobile (40) conçue pour émettre des messages d'avertissement et de panne pour le fonctionnement du moteur de traction (22),
e) et **en ce que** l'unité de contrôle mobile (40) présente un dispositif de mise en prise (50) destiné à la mise en prise automatique ou manuelle dans une fonction de l'unité de travail (14) conformément aux messages d'avertissement et de panne dans le mode de travail.

2. Machine de travail formée par une pompe à béton automotrice (10) présentant les caractéristiques suivantes :
a) un véhicule routier (12) qui comprend un châssis (20), un moteur de traction (22) et une unité de contrôle fixée au véhicule (26) dans une cabine du conducteur (24) pour émettre des informations de fonctionnement et des messages d'avertissement et de panne pour le fonctionnement, en particulier le fonctionnement routier, du moteur de traction (22),
b) une unité de travail (14) sous la forme d'une pompe à béton comportant une flèche de distribution de béton (16) reliée à ladite pompe à béton, laquelle unité de travail (14) est montée sur le châssis (20) et peut être transportée sur celui-ci et alimentée en énergie d'entraînement provenant du moteur de traction (22) pour fournir du béton dans le mode de travail,
c) un dispositif de commande à distance (18) mobile qui peut être commandé à distance depuis le châssis (20) et qui est conçu pour commander la flèche de distribution de béton (16),
**caractérisée en ce que**
d) le dispositif de commande à distance (18) comprend une unité de contrôle mobile (40) pour le moteur de traction (22), l'unité de contrôle mobile (40) étant conçue pour émettre simultanément au moins l'un des messages d'avertissement et de panne émis dans la cabine du conducteur (24),
e) et l'unité de contrôle mobile (40) comportant un dispositif de mise en prise (50) destiné à la mise en prise automatique ou manuelle dans une fonction de l'unité de travail (14) conformément aux messages d'avertissement et de panne dans le mode de travail.

3. Machine de travail selon la revendication 1 ou 2, **caractérisée en ce que** l'unité de contrôle mobile (40) est reliée à une interface côté véhicule (30) par l'intermédiaire d'un trajet de transmission (28) de préférence sans fil.

4. Machine de travail selon l'une des revendications 1 à 3, **caractérisée en ce que** l'unité de contrôle fixée au véhicule et mobile (26, 40) sont commandées en parallèle pour l'affichage simultané des messages d'avertissement et de panne.

5. Machine de travail selon l'une des revendications 1 à 4, **caractérisée en ce que** l'unité de contrôle mobile (40) comporte un dispositif d'affichage (42), en particulier un écran et/ou un témoin d'avertissement destiné à afficher visuellement les messages d'avertissement et de panne.

6. Machine de travail selon l'une des revendications 1 à 5, **caractérisée en ce que** l'unité de contrôle mobile (40) est conçue pour fournir des informations de fonctionnement destinées à la commande à distance de l'unité de travail (14).

7. Machine de travail selon l'une des revendications 1 à 6, **caractérisée en ce que** les messages d'avertissement et de panne sont fournis de préférence sous la forme de représentations symboliques ou textuelles (62) ou de signaux acoustiques ou de rétroaction haptique pour informer un opérateur de dysfonctionnements, de pannes ou de dangers pour le fonctionnement du moteur de traction (22).

8. Machine de travail selon l'une des revendications 1 à 7, **caractérisée par** un processeur d'informations (48) destiné à fournir des informations associées aux messages d'avertissement et de panne telles que la cause de la panne, l'urgence et la nécessité d'agir.

9. Machine de travail selon l'une des revendications 1 à 8, **caractérisée par** un dispositif de transmission (52) qui peut être relié de préférence par l'intermédiaire d'un réseau radio mobile à un poste de commande éloigné du véhicule pour transmettre des messages d'avertissement et de panne et, le cas échéant, des informations de fonctionnement correspondantes du moteur de traction (22) et/ou de l'unité de travail (14) dans le mode travail.

10. Machine de travail selon l'une des revendications 1 à 9, **caractérisée en ce qu'**au moins un message d'avertissement et de panne émis sur l'unité de contrôle fixée au véhicule ou mobile concerne un paramètre choisi dans le groupe constitué de la réserve de carburant, de la température d'huile, du niveau d'huile, du niveau de l'agent réfrigérant, du régime du moteur.

11. Procédé destiné à faire fonctionner une machine de travail, comprenant un véhicule (12), une unité de travail (14) et un dispositif de commande à distance (18) selon l'une des revendications précédentes, dans lequel
a) des informations de fonctionnement et, le cas échéant, des messages d'avertissement et de panne pour le fonctionnement du moteur de traction (22) du véhicule (12) sont émis sur une unité de commande fixée au véhicule,
b) l'unité de travail (14) montée sur le châssis (20) est alimentée en énergie d'entraînement provenant du moteur de traction (22) dans un mode de travail,
c) l'unité de travail (14) est commandée à distance du châssis (20) au moyen d'un dispositif de commande à distance (18) mobile, **caractérisé en ce qu'**au
d) moins l'un des messages d'avertissement et de panne pour le fonctionnement du moteur de traction (22) est émis sur une unité de contrôle mobile (40) du dispositif de commande à distance (18),
e) l'unité de contrôle mobile (40) comportant un dispositif de mise en prise (50) destiné à la mise en prise automatique ou manuelle dans une fonction de l'unité de travail (14) conformément aux messages d'avertissement et de panne dans le mode de travail.

12. Procédé selon la revendication 11, **caractérisé en ce qu'**au moins un message d'avertissement et de panne relatif à un paramètre choisi dans le groupe constitué de la réserve de carburant, de la température d'huile, du niveau d'huile, du niveau de l'agent réfrigérant, du régime du moteur est émis en parallèle sur l'unité de contrôle fixée au véhicule ou mobile.
